(19)

Europäisches Patentamt

European Patent Office

Office européen des brevets

(11)　EP 2 166 158 B1

(12)　EUROPÄISCHE PATENTSCHRIFT

(45) Veröffentlichungstag und Bekanntmachung des Hinweises auf die Patenterteilung:
**16.01.2013  Patentblatt 2013/03**

(51) Int Cl.:
***E02B 5/08*** *(2006.01)*

(21) Anmeldenummer: **09011976.9**

(22) Anmeldetag: **21.09.2009**

(54) **Einlaufrechen für Wasserentnahmebauwerke, zum Beispiel Wasserkraftwerke**

Intake screen for water removal structures, for example hydro-electric plants

Grille d'entrée pour constructions d'extraction d'eau, par exemple de centrales hydroélectriques

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.09.2008  DE 102008048612**

(43) Veröffentlichungstag der Anmeldung:
**24.03.2010  Patentblatt 2010/12**

(73) Patentinhaber: **Universität Kassel**
**34125 Kassel (DE)**

(72) Erfinder:
• **Hassinger, Reinhard, Dr.**
**34317 Habichtswald (DE)**
• **Oppermann, Hans**
**79733 Görwihl (DE)**

(74) Vertreter: **Walther, Walther & Hinz GbR**
**Heimradstraße 2**
**34130 Kassel (DE)**

(56) Entgegenhaltungen:
**CH-A- 349 931　　　DE-A1- 19 714 566**
**FR-A- 1 112 220**

**Beschreibung**

Die vorliegende Erfindung betrifft einen Einlaufrechen für Wasserentnahmebauwerke, zum Beispiel Wasserkraftwerke, wobei der Einlaufrechen vor dem Einlauf zu der Turbine angeordnet ist, umfassend mehrere nebeneinander angeordnete Rechenstäbe, die miteinander verbunden sind.

Sogenannte Einlaufrechen dienen nicht nur dazu zu verhindern, dass größere Abfallstücke wie zum Beispiel Äste oder auch ganze Baumstämme in die Turbine eines Wasserkraftwerkes gelangen können, sondern sie dienen zunehmend auch dazu zu verhindern, dass Fische, hier insbesondere Aale, in die Turbine eines Wasserkraftwerkes gelangen und dort getötet oder zumindest doch verletzt werden.

Es gibt Untersuchungen hierzu, die davon ausgehen, dass 70 % aller Fische, die in die Turbine eines Wasserkraftwerkes gelangen, getötet werden. Insbesondere bei Aalen ist die Population derart gefährdet, dass in neuerer Zeit von den Betreibern von Wasserkraftwerken gefordert wird, entsprechende Maßnahmen zu ergreifen, um zu verhindern, dass Fische in die Turbine eines Wasserkraftwerkes gelangen.

Insofern ist auch bereits bekannt, dass wenn zum Beispiel vermehrt Aale in den Bereich der Turbine gelangen, also die Zeit der Wanderung der Aale begonnen hat, Wasserkraftwerke vollständig abgeschaltet werden. Dies ist, ohne dass dies näher erläutert werden muss, mit hohen finanziellen Einbußen des Kraftwerksbetreibers verbunden.

Aus der DE 890 479 ist eine Rechenanlage für Wasserkraftwerke bekannt, bei der die einzelnen Rechen zwar beabstandet zueinander angeordnet sind, an ihren der Strömung zugerichteten Enden jedoch Abweiselemente aufweisen, die im Wesentlichen den freien Querschnitt zwischen den einzelnen Rechenstäben in ihrer projizierten Fläche vollständig abdecken. Unmittelbar ersichtlich ist, dass hierdurch der Verbauungsgrad wesentlich über 90 % beträgt, was bedeutet, dass bei Einsatz eines solchen Rechens vor beispielsweise einer Wasserturbine erhebliche Strömungsverluste auftreten, die schlussendlich den Betrieb der Wasserturbine unwirtschaftlich machen würden. Darüber hinaus ist erkennbar, dass sich Treibgut zwischen den Rechenstäben verhakt, was schlussendlich zu einer weiteren Verminderung der Strömungsgeschwindigkeit führt, mithin weitere Strömungsverluste erzeugt. Unabhängig hiervon ist zu bemerken, dass sich das zwischen den einzelnen Rechenstäben ansammelnde Treibgut so ohne Weiteres nicht entfernt werden kann, da es sich zwischen den Rechenstäben verhakt. Ein solcher Rechen wird in der Praxis niemals eingesetzt werden.

Aus der DE-AS 1 128 368 ist eine Ausbildung von Rechenstäben bekannt, die endseitig eine Verdickkung mit einem Hohlraum aufweist. Die dieser Literaturstelle zugrunde liegende Aufgabe besteht darin, einen Rechenstab bereitzustellen, mit dem auf einfache Weise erkennbar ist, ob der Rechenstab durch Korrosion soweit angegriffen ist, dass der Ausfall des Rechenstabs zu befürchten ist, das heißt, ob der einzelne Rechenstab als Teil eines Rechens der Aufgabe genügt, sogenanntes "Geschwemmsel" am Durchtritt durch die Turbine zu hindern. Hierbei wird davon ausgegangen, dass der Rechenstab an seinem vorderen Ende den luftgefüllten Hohlraum aufweist, der zumindest wasserseitig geschlossen ist. Die Lehre der zuvor genannten DE-AS 1 128 368 geht des Weiteren davon aus, dass dann, wenn dieser Hohlraum in dem Rechenstab mit Wasser gefüllt ist, der Rechenstab einen Verschleißgrad aufweist, der den Austausch eines solchen Rechenstabes beziehungsweise des gesamten Rechens erforderlich macht. Für eine solche Überprüfung der Funktionsfähigkeit ist wesentliche Voraussetzung, dass, wie bereits ausgeführt, der Rechenstab im Bereich des endseitig angeordneten Hohlraumes völlig dicht ist. Die Herstellung eines solchen dichten Hohlraumes bei einem Rechenstab, der eine Höhe von mehreren Metern aufweist, ist - wenn überhaupt -nur äußerst schwer zu bewerkstelligen, und ist daher entsprechend teuer.

Es sind allerdings auch andere Einlaufrechen bekannt, die verhindern, dass Fische und hier insbesondere Aale, in die Turbine eines Wasserkraftwerkes gelangen können. Es ist insbesondere ein Einlaufrechen bekannt, der aus mehreren rechteckförmigen Rechenstäben besteht, die untereinander mit Querstreben verbunden sind. Die Breite solcher Rechenstäbe beträgt üblicherweise etwa 10 cm bis 15 cm, wobei die Stäbe eine Dicke von etwa 8 mm aufweisen und einen Abstand zueinander von etwa 10 mm bis 20 mm. Die Stäbe sind in Einlaufrichtung scharfkantig, sodass Fische, die aufgrund der Strömungsgeschwindigkeit an den Einlaufrechen gedrückt werden, durch die Rechenstäbe selbst hervorgerufene Verletzungen davontragen können. Darüber hinaus ist festzuhalten, dass der Verbauungsgrad, d. h. der von den Rechenstäben blockierte Querschnittsanteil relativ hoch ist.

Um die Gefahr der Verletzung der Fische durch den Einlaufrechen zu vermindern, ist aus der EP 0 908 214 B1 bereits ein Einlaufrechen zum Abhalten von Abfällen bekannt, der entgegen der Strömungsrichtung auf der der Strömung zugewandten Seite abgerundete Rechenstäbe aufweist. Jedoch beträgt auch hier die Dicke der Rechenstäbe etwa bis 10 mm beträgt, so dass auch hier der Verbauungsgrad relativ hoch ist.

Geht man in diesem Zusammenhang wie bereits zuvor erläutert davon aus, dass der Abstand zwischen den einzelnen Stäben etwa 10 mm bis 20 mm betragen muss, um die Fische wirksam vom Eintritt in die Turbine abhalten zu können, wie dies im Übrigen aus der DE 197 14 566 A1 bei einem Einlaufrechen für ein Wasserkraftwerk bekannt ist, und geht man weiterhin davon aus, dass die Stäbe selbst eine Stärke von etwa 8 mm bis 10 mm haben, so ergibt sich ein Verbauungsgrad von etwa 45% bei 10 mm Abstand beziehungsweise zirka 28% bei 20 mm Abstand. Das heißt, dass der effektive Durchlass-querschnitt für das Wasser zur Turbine aufgrund des durch den Rechen verminderten Querschnitts des Rohres zum Teil lediglich etwas mehr als die Hälfte des lichten Durchmessers beträgt. Es ist ganz offensichtlich, dass dies den Wirkungsgrad einer Turbine ganz erheblich negativ beeinflusst, was sich insbesondere bei Niedrigwasser bemerkbar macht.

Der Erfindung liegt insofern die Aufgabe zugrunde einen Einlaufrechen der eingangs genannten Art bereitzustellen, mit welchem der Verbauungsgrad relativ niedrig gehalten werden kann, der allerdings darüber hinaus zuverlässig den Fischen den Zugang zur Turbine verwehrt, der darüber hinaus die Verletzungsgefahr der Fische am Einlaufrechen minimiert und der preiswert herstellbar ist.

Die Aufgabe wird erfindungsgemäß dadurch gelöst dass die Rechenstäbe der Strömung zugerichtet jeweils eine Umbörtelung in Form einer Öse oder Schlaufe aufweisen. In Richtung Unterstrom ist der Rechenstab verhältnismäßig dünn. Das Verhältnis der seitlichen Erstreckung der Umbörtelung zu der Dicke oder Materialstärke des Rechenstabes beträgt etwa 3,5 bis 4,5, vorzugsweise 4/1. Eine solche Umbörtelung in Form einer Schlaufe oder einer Öse sorgt für eine Verdickung des Rechenstabes auf seiner der Strömung zugewandten Seite. Aufgrund einer solchen Verdickung des Stabes durch eine solche Umbörtelung in Form einer Schlaufe oder Öse wird nicht nur die Verletzungsgefahr der gegebenenfalls durch eine starke Strömung an den Einlaufrechen gedrückten Fische reduziert, sondern es hat sich gezeigt, dass hierdurch auch der effektive Verbauungsgrad niedrig gehalten werden kann. Wesentlich ist ebenfalls, dass dadurch, dass die dickste Stelle des Rechenstabes, also das stirnseitige Ende der Umbörtelung, sich unmittelbar an der Vorderseite der Umbörtelung befindet, sich Treibgut nicht in den Rechen verhaken kann. Das heißt, ein solcher Rechen ist äußerst wartungsfreundlich. Ebenfalls wurde darauf hingewiesen, dass solche Rechenstäbe eine Materialstärke von s =1,5 mm bis 2 mm aufweisen. Es hat sich herausgestellt, dass nicht der Querschnitt im Bereich der Umbörtelung, sondern der weiter unterstrom gelegene Querschnitt im Bereich der parallelen Bleche für den Verbauungsgrad maßgebend ist. Dieser ist wegen der geringen Blechdicke dann aber vergleichsweise gering. Das gilt dann, wenn die Gesamtlänge des Stabes ein Vielfaches der Länge der Umbörtelung beträgt. Erklärbar ist dies dadurch, dass durch den Venturi-Effekt die durch die Umbörtelung im Bereich der Umbörtelung vorgenommene Minderung des effektiven Querschnittes, durch die kurze Erstreckung der Umbörtelung im Wesentlichen kompensiert werden kann. Das heißt, durch den aufgrund der Umbörtelung erzeugten Venturi-Effekt wird die Wasserenergie durch die tatsächliche Querschnittsminderung nicht wesentlich vermindert, was bedeutet, dass die Verluste gering gehalten werden können. Das heißt, rechnerisch wird für die Ermittlung des Verbauungsgrades von dem Abstand zweier Rechenstäbe unterstrom, außerhalb der Umbörtelung des Rechenstabes ausgegangen und dieser Wert in das Verhältnis zur Materialstärke des Rechenstabes gesetzt. Hiernach ergeben sich für den Rechen mit 6 mm Umbörtelungsdurchmesser im Bereich seines Frontradius Verbauungsgrade von etwa 5,8 % beim 20-mm-Rechen und etwa 9,4 % beim 10-mm-Rechen. (20 bzw. 10 mm = Rechenstababstand, gemessen jeweils vom äußeren Rand der Umbörtelung zur äußeren Kante des benachbarten Rechenstabes zzgl. der Breite der Umbörtelung von ca. 6 mm).

Ein Rechenstab, dessen engste Stelle weit vorne angebracht ist, und der eine vertustarme Kontur aufweist, zeichnet sich Insbesondere durch eine Abkantung des die Umbörtelung aufweisenden Bereichs des Rechenstabes aus. Die Abkantung befindet sich in der Ebene der Umbörtelung und zeigt von dieser weg. Wesentlich zur Erzielung der oben genannten Vorteile ist die Länge des abgekanteten oder abgewinkelten Bereichs, die sich wie folgt bestimmt:

$$L1 = r_a \cdot \sin\alpha + (r_a \cdot \cos\alpha / \tan\alpha)$$

Hierbei ist der Winkel $\alpha$ der Winkel der Abkantung gegenüber dem unteren Ende des Rechenstabes. Der Winkel $\alpha$ beträgt üblicherweise zwischen 4° und 8°, gemessen von der geometrischen Mittellängsachse des Rechenstabes zur Mittellängsachse in der Abkantung. Der Radius $r_a$ bestimmt sich zu dem Außenradius der kreisförmigen Rundung der Umbörtelung, abzüglich der halben Materialstärke des Rechenstabes im Bereich der Umbörtelung ($r_a = r - s/2$).

Vorteilhaft ist weiterhin vorgesehen, dass der Rechenstab aus rostfreiem Stahl hergestellt ist. Durch die Verwendung von Edelstahl ergeben sich im Wesentlichen glatte Oberflächen, die einer Verletzung von Fischen, die an dem Einlaufrechen anstehen, weitgehend entgegenwirkt. Allerdings ist in diesem Zusammenhang noch Folgendes zu vermerken:

Die Herstellung der Umbörtelung erfolgt durch Walzprofilierung (Rollen) der einzelnen Rechenstäbe. Hierdurch erreicht man im Bereich der stärksten Krümmung im Bereich der Stirnseite des Stabes, dass dort das Material relativ gesehen rauer ist, als im übrigen Bereich des Stabes. Das heißt, durch die Biegung des Rechenstabes entsteht eine mikroraue Oberfläche, die eine Grenzschichtwirbetbildung bewirkt, die für eine Reduktion des Strömungswiderstandes sorgt. Dieses Phänomen ist aus der Tierwelt bekannt, wo nämlich herausgefunden wurde, dass eine relativ geringe Rauhigkeit einer Oberfläche zu einer Verminderung des Strömungswiderstandes führt.

Wie bereits ausgeführt, sind die einzelnen Rechenstäbe nach der Erfindung mit Ausnahme der Umbörtelung relativ gesehen dünn. Im Einzelnen liegt die Stärke eines solchen Rechenstabes bei etwa 1,5 mm bis 2 mm. Wie ebenfalls bereits ausgeführt, weisen bekannte Rechenstäbe eine Stärke von 8 mm bis 10 mm auf. Bei Verwendung solcher im Querschnitt starker Rechenstäbe entstehen ausgangsseltig Wirbelablösungen. Eine Ablösung der Wirbel strömungsausgangsseitig auf der einen Seite des Rechenstabes wird immer unterschiedlich sein zu der Wirbelablösung auf der gegenüberliegenden Seite des Rechenstabes. Die Folge hiervon ist eine Druckdifferenz zwischen der einen Seite des Rechenstabes zu der anderen Seite des Rechenstabes sein. Eine solche Druckdifferenz bewirkt ein Schwingen des Rechenstabes. Es hat sich gezeigt, dass beim Einsatz eines solchen Rechenstabes über mehrere Jahrzehnte durch andauernde Schwingungen die Festigkeit des Materials des Rechenstabes nachlässt. Das heißt das Metall, sofern Metall verwendet wird, wird spröde, was den Eintritt von Wasser begünstigt, was wiederum zu einer vermehrten Rostbildung führt. Dies mit der Folge, dass dann ein solcher Rechenstab recht zügig verschleißt. Die Schwingungsneigung von derartigen rechteckförmigen Rechenstäben wird noch dadurch erhöht, wenn derartige Rechenstäbe durch die Strömung nicht parallel zu ihrer Längsrichtung ausgeströmt werden, sondern winklig dazu. Die Folge einer winkligen Anströmung an einen rechteckigen Stab ist, dass sich auf der der Strömung abgewandten Seite des Stabes Strömungsablösungen bilden, die die Schwingungsneigung, wie bereits ausgeführt, noch weiter erhöhen. Bei den erfindungsgemäßen Rechenstäben ist die Gefahr der Strömungsablösung bei schräger Anströmung geringer, da die Rundung durch die Umbörtelung ganz allgemein die Ablösungstendenz vermindert. Darüber hinaus ist die Ablösungstendenz dann besonders gering, wenn die durch die Umbörtelung entstehende Nase auf der Seite liegt, von der die Strömung kommt, da sie wie die Krümmung eines Flugzeugflügels der notwendigen Krümmung der Stromlinien entgegen kommt.

Ein weiterer Vorteil besteht darin, dass durch die Umbörtelung zwischen zwei Rechenstäben lediglich an einem Punkt, nämlich dem Scheitelpunkt der Umbörtelung zum Nachbarrechenstab, der Ort des geringsten Querschnittes zwischen zwei benachbarten Rechenstäben ist. Das heißt Gegenstände, insbesondere Abfälle, sammeln sich in Strömungsrichtung entweder vor den Rechenstäben, oder wenn sie durch den offenen Querschnitt zwischen zwei Stäben dringen können, dann ist in jedem Falle gewährleistet, dass sie auf der strömungsausgangsseitigen Seite des Einlaufrechens wieder austreten können. Das heißt, es besteht nicht die Gefahr, dass sich Gegenstände Innerhalb des Einlaufrechens verklemmen. Insofern ist auch kein kammartiger Abstreifer *erforderlich, um zwischen den* Rechenstäben festsitzende Gegenstände herauszuholen, sondern es reicht vielmehr ein an der Oberfläche im Wesentlichen glatter Abstreifer, um vor dem Einlaufrechen befindliche Gegenstände zu entfernen. Das heißt, der erfindungsgemäße Einlaufrechen kann sich im Wesentlichen nicht zusetzen. In diesem Zusammenhang sei darauf hingewiesen, dass die einzelnen Rechenstäbe durch Querstäbe miteinander verbunden sind. Diese Querstäbe verlaufen bei herkömmlichen Rechen etwa mittig zur Breite zu den Rechenstäben. Das heißt, wenn Abfälle zwischen den Rechenstäben nach dem Stand der Technik in Strömungsrichtung gesehen nach den Querstäben klemmen, dann ist der kammartige Abstreifer nicht in der Lage, diese Gegenstände zu entfernen. Denn in einem solchen Fall würde er gegen die Querstäbe taufen.

Da bei dem erfindungsgemäßen Einlaufrechen die jeweilige Überbörtelung eines jeden Rechenstabes ihren Scheitelpunkt in Strömungsrichtung gesehen im Wesentlichen am vorderen Ende des Rechenstabes aufweist, besteht hier, wie dies bereits dargestellt wurde, die Gefahr, dass sich Gegenstände zwischen den Rechenstäben verkanten, wenn überhaupt, nur in weitaus geringerem Maße.

Anhand der Zeichnungen wird die Erfindung beispielhaft näher erläutert:

Fig 1     zeigt schematisch einen Elnlaufrechen mit mehreren nebeneinander angeordneten Rechenstäben;

Fig. 2     zeigt beispielhaft zwei Rechenstäbe gemäß dem Stand der Technik;

Fig. 3     zeigt im Querschnitt zwei nebeneinander angeordnete Rechenstäbe nach der Erfindung.

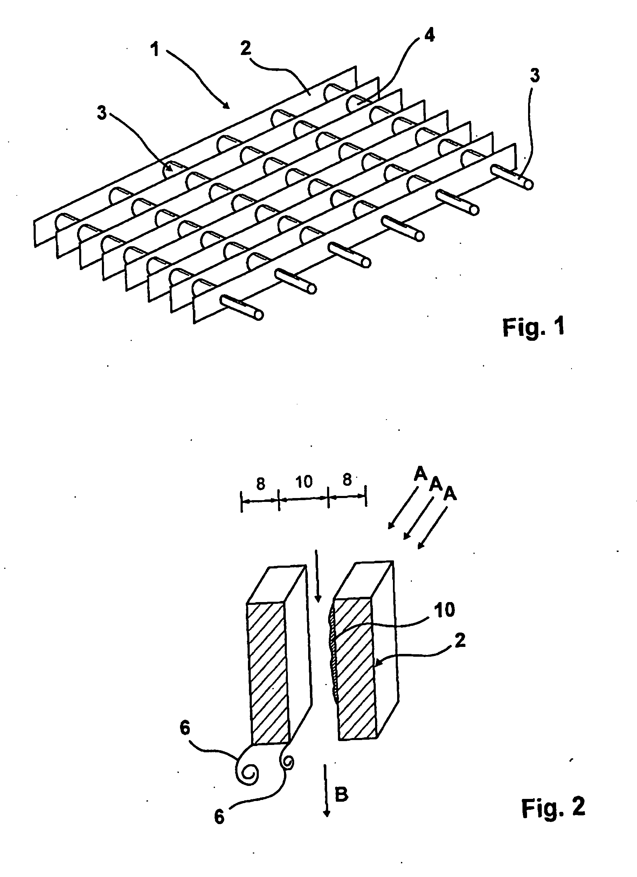

Bei dem Einlaufrechen 1 gemäß Fig. 1 sind mehrere parallel zueinander angeordnete Rechenstäbe 2 vorgesehen, die durch Querstäbe 3 miteinander verbunden sind. Hierbei befinden sich zwischen den einzelnen Rechenstäben Hülsen 4, die auf den Querstab aufgeschoben sind, und so für den erforderlichen Abstand zwischen den einzelnen Rechenstäben sorgen. Die Strömungsrichtung ist durch die Pfeile A gekennzeichnet

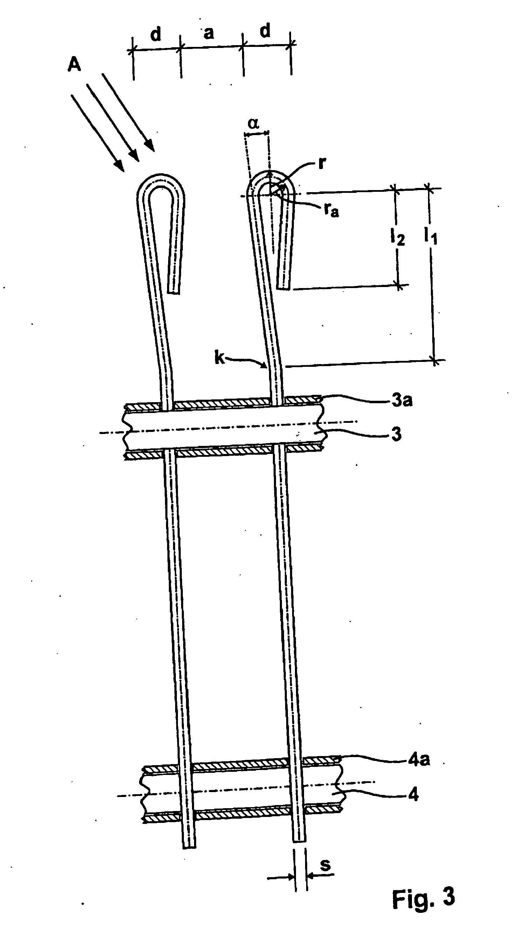

Gegenstand der Erfindung ist allerdings die Ausbildung der Rechenstäbe gemäß Fig. 3. Zuvor wird in Fig. 2 noch der Stand der Technik beschrieben, wonach bekannt ist, die Rechenstäbe mit etwa 8 mm Stärke auszubilden und den lichten Abstand zwischen den Stäben zwischen 10 und 20 mm zu wählen. Hierbei können sich strömungsausgangsseitig (Pfeil B) an den unteren Stirnkanten der Rechenstäbe 2 Wirbel 6 unterschiedlicher Größe ausbilden, wobei aufgrund der Druckdifferenz zwischen diesen Wirbeln 6 die Stäbe 2 beginnen zu schwingen.

Betrachtet man in diesem Zusammenhang demgegenüber die erfindungsgemäßen Rechenstäbe gemäß Fig. 3, so erkennt man, dass diese wesentlich dünner ausgebildet sind. Im Einzelnen beträgt die Materialstärke s der Rechenstäbe gemäß der Erfindung etwa 1,5 mm bis 2 mm. Die Querstäbe 3, 4 verlaufen In zwei Ebenen zueinander, was eine Erhöhung der Steifigkeit des Rechens bewirkt. Abgestützt sind die Stäbe durch Hülsen 3a, 4a zwischen den Rechenstäben auf den Querstreben 3, 4.

Maßgeblich für die Erzielung der bereits zuvor erwähnten Vorteile, nämlich einen möglichst breiten Bereich am vorderen Ende der Umbörtelung In Richtung auf die Strömung zugerichtet, eine verlustarm Kontur hinter der Engstelle, mit allmählicher Wiederaufbereitung, damit die kinetische Strömungsenergie in Druck zurückverwandelt wird sowie eine große Steifigkeit des Rechenstabes mit einem an die Blechdicke angepassten Außenrundradius ist, dass die Länge L1 von der Abkantung k bis zum Mittelpunkt der kreisförmigen Umbörtelung sich berechnet zu L1 = $r_a$ · sina + ($r_a$ · cos(a) / tan$\alpha$). Hierbei ist $r_8$ = r - s/2. r ist hierbei der Radius von dem Mittelpunkt des Radius der Umbörtelung bis zum Außenrand der Umbörtelung. Der Winkel $\alpha$ gibt den Winkel der Abkantung an. Er beträgt zwischen 4° und 8°. Die Länge der Umbörtelung L2 berechnet sich wie folgt:

$$L2 = L3 - (x \cdot s / tan\alpha).$$

Der Parameter x kann hierbei Werte von 0,75 bis 1,5 annehmen, wobei darauf hingewiesen wird, dass dieser Wert schlussendlich von dem Material und den Bedingungen abhängig ist, unter denen die Verformung des Bleches zur Herstellung der Umbörtelung stattfindet. Der maximale Durchmesser d der Umbörtelung beträgt zwischen 6 und 10 mm; der lichte Abstand, d. h. der geringste Abstand zwischen zwei Stäben im Bereich der Umbörtelung beträgt zwischen 10 mm und 20 mm. Wie bereits an anderer Stelle erläutert, ist maßgeblich für den Verbauungsgrad nicht etwa der minimale Abstand zwischen zwei Rechenstäben im Bereich der Umbörtelung, sondern vielmehr der maximale Abstand im Bereich außerhalb der Umbörtelung. Der Abstand zwischen den Rechenstäben beträgt außerhalb der Umbörtelung zwischen 14,5 und 28 mm (14,5 mm = 10 mm Stababstand + 6 mm Umbörtelung, abzüglich 1,5.mm Wandstärke; 28 mm = 20 mm Stababstand + 10 mm Umbörtelung, abzüglich 2 mm Wandstärke), sodass sich ein Verbauungsgrad bei einer Stärke s des Rechenstabes von 1,5 mm von etwa 9,4 % bei einem Abstand der Stäbe zueinander von a = 10 mm (1,5 mm / 16 mm) und ein Verbauungsgrad von 6,7 % (2 mm / 30 mm) bei einem Abstand von a = 20 mm ergibt (Die Breite der Umbörtelung wird jeweils an der breitesten Stelle gemessen, also im Bereich der Krümmung oder Radius der Umbörtelung). Der Verbauungsgrad eines Einlaufrechens gemäß Stäben der Darstellung gemäß Fig. 2 mit einer durchgängigen Rechenstabstärke von etwa 8 mm bei einem Abstand von etwa 10 mm beträgt hingegen etwa 44%.

Weiterhin ergibt sich bei Schräganströmung des Einlaufrechens 1 entsprechend der Pfeile A aus der Fig. 3, dass dort die Ablösung der Strömung auf der der Strömung abgewandten Seite im Wesentlichen unterdrückt wird. Dies Im Gegensatz dazu bei einer Schräganströmung von Rechenstäben gemäß Fig. 2, bei der sich auf der strömungsabgewandten Seite Strömungsablösungen 10 ergeben, wie dies aus Fig. 2 erkennbar ist.
Die Schräganströmung erfolgt, sofern sie vorhanden ist, immer von der gleichen Seite, wenn nicht die Geometrie des Zulaufkanals geändert wird. Grundsätzlich gilt aber, dass auch bei schräger Anströmung von der anderen Seite (also nicht entsprechend der Pfeile A), gleichwohl Ablösungstendenzen vermindert werden, da durch die Rundung aufgrund der Umbörtelung die Strömungsverhältnisse immer geringer sind, als bei einem rechteckigen oder quadratischen Anströmungsprofil.

**Patentansprüche**

1. Einlaufrechen (1) für Wasserentnahmebauwerke, zum Beispiel Wasserkraftwerke, wobei der Einlaufrechen vor dem Einlauf der Turbine angeordnet ist, umfassend mehrere nebeneinander angeordnete Rechenstäbe (2), die miteinander verbunden sind und einen lichten Abstand zwischen 10 und 20 mm aufweisen,
   **dadurch gekennzeichnet,**
   **dass** die Rechenstäbe (2) der Strömung zugerichtet jeweils eine Umbörtelung (2a) in Form einer Schlaufe aufweisen, wobei der lichte Abstand zwischen den Rechenabständen im Bereich der Umbörtelung zwischen 10 mm und 20 mm beträgt.

2. Vorrichtung nach einem der vorangehenden Ansprüche,
   **dadurch gekennzeichnet,**
   **dass** die seitliche Erstreckung d der Umbörtelung (2a) zu der Rechenstabstärke s ca. 4/1 beträgt.

3. Vorrichtung nach einem der vorangehenden Ansprüche,
   **dadurch gekennzeichnet,**
   **dass** der Rechenstab (2) aus rostfreiem Stahl hergestellt ist.

4. Vorrichtung nach einem der vorangehenden Ansprüche,
   **dadurch gekennzeichnet,**
   **dass** die Rechenstäbe (2) zur Bildung des Einlaufrechens untereinander durch Querstäbe (3, 4) verbunden sind, die in zwei Ebenen zueinander verlaufen.

5. Vorrichtung nach einem der vorangehenden Ansprüche,
   **dadurch gekennzeichnet,**
   **dass** der Rechenstab (2) eine Abkantung (k) aufweist, wobei die Länge des abgekanteten Abschnittes L1 sich wie folgt berechnet: L1 = $r_a$ · sin$\alpha$ + ($r_a$·cos ($\alpha$) / tan$\alpha$), wobei 4° $\leq \alpha \leq$ 8° ist, und $r_a$ sich bestimmt aus dem mittleren Radius des Kreisbogens der Umbörtelung.

**Claims**

1. An intake rake (1) for water removal structures, for example hydro-electric plants, wherein the intake rake is disposed in front of the intake of the turbine, comprising multiple rake bars (2) that are disposed next to each other and connected to each other and have a free spacing of between 10 and 20 mm, **characterized in that** the rake bars (2) have a bead (2a) in the shape of a loop that is oriented toward the current, wherein in the area of the bead, the free spacing between the rake spacings amounts to between 10 mm and 20 mm.

2. The device according to one of the afore-mentioned claims, **characterized in that** the ratio of the lateral extension d of the bead (2a) relative to the thickness s of the rake bar amounts to ca. 4/1.

3. The device according to one of the afore-mentioned claims, **characterized in that** the rake bar (2) is manufactured from stainless steel.

4. The device according to one of the afore-mentioned claims, **characterized in that** in order to form the intake rake, the rake bars (2) are connected to each other by cross bars (3, 4) that extend in two planes relative to each other.

5. The device according to one of the afore-mentioned claims, **characterized in that** the rake bar (2) has a bending (k), the length of the bent section L1 being calculated as follows:

$$L1 = r_a \cdot \sin\alpha + \left(r_a \cdot \frac{\cos\alpha}{\tan\alpha}\right),$$ wherein $4° \leq \alpha \leq 8°$ and $r_a$ is determined from the central radius of the circular arc of the bead.

**Revendications**

1. Grille de retenue (1) pour installation de prise d'eau, par exemple centrale hydraulique, la grille de retenue étant disposée en amont de l'embouchure de la turbine, cette grille comportant plusieurs barreaux de grille (2) disposés côte à côte et liés entre eux en ménageant un espacement compris entre 10 et 20mm, **caractérisée en ce que,** les barreaux de grille (2) sont orientés dans le sens du courant et comportent un bord rabattu (2a) en forme de crochet fermé, l'espacement entre les séparations de grille, dans le secteur du bord rabattu étant compris sensiblement entre 10mm et 20mm.

2. Dispositif selon la revendication 1, **caractérisé en ce que,** l'extension latérale du bord rabattu (2a) par rapport à la résistance des barreaux de grille est d'environ 4/1.

3. Dispositif selon l'une des revendications précédentes, **caractérisé en ce que,** le barreau de grille (2) est fabriqué en acier inoxydable.

4. Dispositif selon l'une des revendications précédentes, **caractérisé en ce que,** les barreaux de grille (2) utilisés pour la réalisation de la grille de retenue sont reliés entre eux par des barres transversales (3, 4) disposées à deux niveaux distincts.

5. Dispositif selon l'une des revendications précédentes, **caractérisé en ce que,** le barreau de grille (2) présente un arrondi (k), la longueur de la section arrondie L1 étant définie comme suit :

$$L1 = r_a\sin\alpha + (r_a\cos(\alpha) / \tan\alpha),$$ où $4° \leq \alpha \leq 8°$ et où $r_a$ est déterminé par le rayon moyen de l'arc de cercle du bord arrondi.

1

2

4

3

3

**Fig. 1**

8    10    8

A A A

10

2

6

6

B

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 890479
- DE AS1128368 B
- EP 0908214 B1
- DE 19714566 A1